# EUROPEAN PATENT APPLICATION

(11) **EP 3 937 431 A1**
(43) Date of publication of application: **12.01.2022**
(21) Application number: 20782172.9
(22) Date of filing: 05.03.2020
(51) Int. Cl.: H04L 12/28, H04L 12/66, B60R 16/023, G06F 21/55, B60W 30/09

(54) **COMPUTING SYSTEM FOR AUTOMOBILE AND PROCESSING METHOD FOR RECEPTION DATA**

(30) Priority: 29.03.2019 JP 2019068441
(71) Applicant: MAZDA MOTOR CORPORATION, Hiroshima 730-8670 (JP)
(72) Inventor: HORIGOME Daisuke, Aki-gun, Hiroshima 730-8670 (JP); SAKASHITA Shinsuke, Aki-gun, Hiroshima 730-8670 (JP)
(74) Representative: Behr, Wolfgang
(86) International application number: PCT/JP2020/009464
(87) International publication number: WO 2020/203022

(57) **Abstract**

An automobile computing system (SY) includes: a computing device (6) configured to determine a target motion of an automobile (1) in traveling along a path generated based on an output from an outside-vehicle information acquirer (M1) mounted on the automobile and configured to acquire information on an outside-vehicle environment, and to output a control signal for implementing the target motion to an actuator (7); and a security gateway device (4) disposed between an external network (90) and the computing device (6) and configured to determine validity of access from an external communication device through a network (90) based on a preset criterion, and determine whether access from the communication device is permitted or not.

## Description

### TECHNICAL FIELD

The technique disclosed here relates to, for example, a computing system for an automobile (automobile computing system) and a method for processing received data.

### BACKGROUND ART

In recent years, safe driving assistance technology and autonomous driving technology using, for example, information obtained by vehicle-to-vehicle communication or information obtained through network communication with an external server or other devices have been introduced. In such communication with outside of the vehicle, connection is given to equipment or a device in various communication modes, and a variety of types of information are transmitted or received. These types of information can include personal information or important information related to driving control, and need to be protected against unauthorized access such as cyber attacks. In addition, the amount of information input to and output from automobiles (especially, the amount of input information) is expected to increase dramatically in the future. In view of this, these communications are demanded to have high confidentiality, completeness, and availability.

PATENT DOCUMENT 1 describes a technique of determining a network to be shut off and shutting off the network based on a location where an incident occurs and a control state of a vehicle in a case where an incident is detected in one of a plurality of networks separated by functions in the vehicle.

Specifically, in the technique of PATENT DOCUMENT 1, a communication controller receives a vehicle ECU information packet that is transmitted and received between devices, and information included in the vehicle ECU information packet is stored as vehicle ECU information in a vehicle ECU information DB in chronological order. In a case where an abnormal communication pattern occurs, for example, an incident detection processor compares incident determination information received from a center server with a CAN ID included in a vehicle ECU information packet acquired from the vehicle ECU information DB, and if the information matches with the CAN ID, the incident detection processor determines that an incident occurs, and notifies a controller, and the controller shuts off unauthorized communication.

### CITATION LIST

### PATENT DOCUMENT

PATENT DOCUMENT 1: Japanese Patent Publication No. 2018-133721

### SUMMARY OF THE INVENTION

### TECHNICAL PROBLEM

In the configuration of the technique described in PATENT DOCUMENT 1, however, in a case where an incident occurs, a location of the incident is specified and communication based on the specified location is shut off. Thus, a delay might occur in detecting unauthorized access.

The technique disclosed here has been made in view of the foregoing circumstances and has an object of enhancing security with reduction of a computation load in an automobile computation system having a computation function for autonomous traveling.

### SOLUTION TO THE PROBLEM

To solve the problems described above, the technique disclosed here is directed to an automobile computing system configured to be mounted on an automobile, and the automobile computing system includes: a computing device configured to receive an output from an outside-vehicle information acquirer, generate a path located on a road and avoiding an obstacle, determine a target motion of an automobile in traveling along the path, and output a control signal for implementing the target motion to an actuator, the outside-vehicle information acquirer being mounted on the automobile and configured to acquire information on an outside-vehicle environment, the actuator being configured to generate a driving force, a braking force, and a steering angle; and a security gateway device disposed between the computing device and an external network to which an external communication device is connected, the security gateway device being configured to determine validity of access from the communication device through the network based on a preset criterion and determine whether the access from the communication device is permitted or not.

For example, the security gateway device may include a decoding unit configured to decode a received signal received through the network, an authentication unit configured to determine validity of the access and determine whether the access from the communication device is permitted or not, and an encryption unit configured to encrypt a signal received from a communication device whose access is permitted by the authentication unit and decoded by the decoding unit, and output the encrypted signal to the computing device.

Here, access from an external communication device is a concept including a so-called access request for reading and writing in-vehicle information issued from the external communication device to the computing device of this aspect, and also including access with which the computing device of this aspect requests, for example, information to an external communication device (including an external management server) and returns information from the external communication device to the computing device of this aspect.

With this configuration, the computing device directly receives an output from the outside-vehicle information acquirer, while receiving access from an external network through the security gateway device. This interposition of the security gateway device can prevent or reduce an influence on a process of the computing device by, for example, an access situation from the external communication device so that an excessive load is not applied to the computing device.

In addition, access paths from external communication devices are collectively input to the security gateway device so that processes such as authentication are performed in the security gateway device, and signals only of authenticated external communication devices are allowed to flow toward the computing device. Accordingly, it is further ensured to prevent or reduce unauthorized access to the computing device having an important function of generating a driving force, a braking force, and a steering angle, for example.

In the automobile computing system, in a case where the access from the communication device is valid, the security gateway device may output a start signal for starting the computing device while the computing device is in a sleep state or a suspended state.

With this configuration, in a case where no accesses are issued from external communication devices, the computing device can be set on standby in a sleep state or a suspended state.

In the automobile computing system, the outside-vehicle information acquirer may include a camera, and the security gateway device may determine validity the access from the communication device based on a checking result between an image captured by the camera and the communication device that has issued the access.

With this configuration, validity of access from a communication device captured by the camera is determined, and thus, security can be enhanced, and a load on the security gateway device can be reduced.

A received data processing method for processing received data received by an automobile from an external network in an automobile computing system including a computing device configured to receive an output from an outside-vehicle information acquirer, generate a path located on a road and avoiding an obstacle, and determine a target motion of an automobile in traveling along the path, the outside-vehicle information acquirer being configured to acquire information on an outside-vehicle environment, and a security gateway device disposed between the computing device and an external network, and the method includes: a perceiving step of perceiving a target outside a vehicle based on an output from the outside-vehicle information acquirer; a specifying step of specifying the communication device based on a preset criterion with respect to access from the communication device to the security gateway device in a case where the security gateway device receives access from the external communication device through the external network; a checking step of checking the communication device specified in the specifying step against the target perceived in the perceiving step; an authenticating step of authenticating access from a communication device with which a match is confirmed in the checking step; and a decoding step of decoding data received from the communication device authenticated in the authenticating step by the security gateway device and outputting the decoded data to the computing device.

As described above, the communication devices are specified based on the preset criterion, and authentication is performed after a match is confirmed in the checking step. Thus, security can be enhanced, and a load on the security gateway device can be reduced.

Alternatively, a received data processing method for processing received data received by an automobile from an external network in an automobile computing system including a computing device configured to receive an output from an outside-vehicle information acquirer, generate a path located on a road and avoiding an obstacle, and determine a target motion of an automobile in traveling along the path, the outside-vehicle information acquirer being configured to acquire information on an outside-vehicle environment, and a security gateway device disposed between the computing device and an external network, and the method includes: a specifying step of specifying a plurality of communication devices in a case where the plurality of communication devices issue access to the computing device to the security gateway device through an external network; a setting step of setting, based on a preset criterion, a priority order to the plurality of communication devices specified in the specifying step; an authenticating step of authenticating the plurality of communication devices according to the priority order set in the setting step; and a decoding step of decoding data received from the communication devices authenticated in the authenticating step by the security gateway device and outputting the decoded data to the computing device.

For example, in a case where an automobile travels, surrounding conditions change from every minute, and especially in vehicle-to-vehicle communication, a communication target is also expected to change every minute. In view of this, as described in the above aspect, the priority order is set to the specified communication target devices, and authentication is performed according to this priority order. In this manner, communication can be established in order from a communication target having high importance. For example, the importance in communication with a communication target changes depending on situations such as the distance from the own-vehicle and the speed of approach or departure so that communication can be thereby established in order from a communication target having great influence on the own-vehicle, and safety and convenience can be enhanced.

In the received data processing method, the specifying step may include a fraud device specifying step of specifying a device issuing unauthorized access from the plurality of communication devices, based on a preset criterion, and the device specified in the fraud device specifying step may be removed from a target to which the priority order is provided.

In this manner, unnecessary authentication can be avoided, and a load can be thereby reduced.

### ADVANTAGES OF THE INVENTION

As described above, the technique disclosed here is capable of enhancing security with reduction of a computation load in an automobile computing system having a computation function for autonomous traveling.

### BRIEF DESCRIPTION OF THE DRAWINGS

[FIG. 1] A block diagram illustrating a functional configuration of an automobile computing system according to an embodiment.
[FIG. 2] A flowchart depicting a received data processing method 1 by a computing system.
[FIG. 3A] An illustration for describing a process in a setting step of a computing system.
[FIG. 3B] A table for describing a process in the setting step of the computing system.
[FIG. 4] A flowchart depicting a received data processing method 2 by a computing system.
[FIG. 5A] A block diagram illustrating a functional configuration of an introduction example to a real system.
[FIG. 5B] A block diagram illustrating a functional configuration of an introduction example to a real system.

### DESCRIPTION OF EMBODIMENTS

An exemplary embodiment will be hereinafter described in detail with reference to the drawings.

### EMBODIMENT

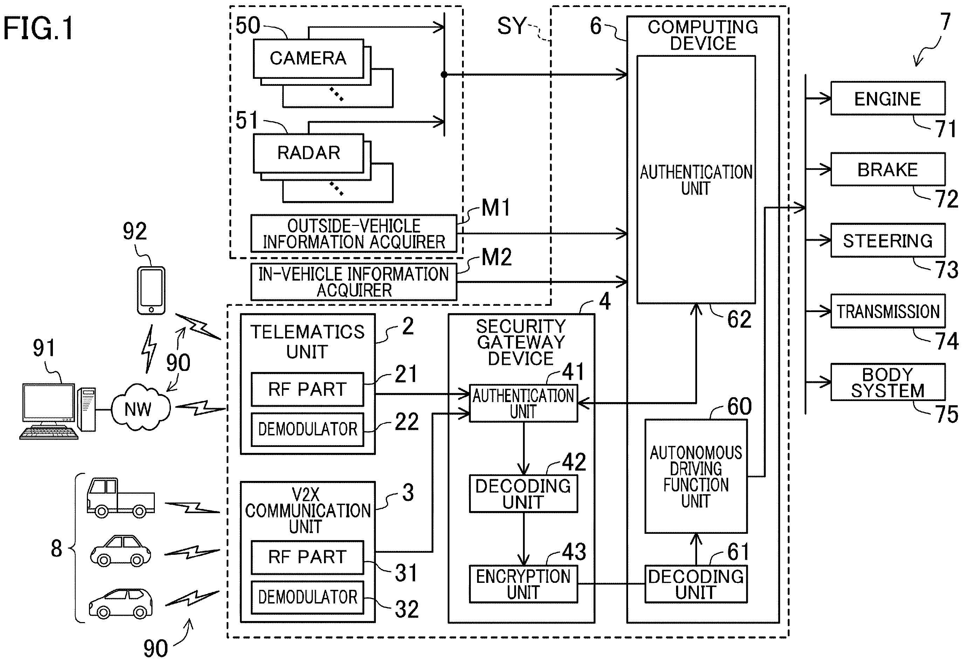

FIG. 1 illustrates a configuration of an automobile computing system SY (hereinafter referred to simply as a computing system SY) according to this embodiment. The computing system SY is, for example, a computing system mounted on a four-wheeled automobile 1. The automobile 1 is capable of performing manual driving of traveling in accordance with an operation of, for example, an accelerator by a driver, assist driving of traveling with assistance to an operation of a driver, and autonomous driving of traveling without an operation by the driver,. In the following description, to distinguish the automobile 1 of this embodiment from other vehicles, the automobile 1 will also be referred to as an own-vehicle 1.

The computing system SY is configured to receive an output from an outside-vehicle information acquirer M1, generates a path avoiding an obstacle on a road, and determining a target motion of the automobile 1 in traveling along the path. The computing system SY is also configured to output a control signal for achieving the determined target motion to an actuator 7 that generates a driving force, a braking force, and a steering angle. This embodiment is characterized in that a computing device with a single-unit configuration achieves the determination of a target motion and the output of the control signal for obtaining the target motion. The computing device 6 with a single-unit configuration is, for example, a microprocessor constituted by one or more chips, and includes a CPU, a memory, and other components. The memory stores a module that is software executable by a processor. Functions of components of the computing device 6 are implemented by execution of modules stored in the memory by the processor. The memory may store data of a model used in the computing device 6. A plurality of processors and/or a plurality of memories may be provided. Functions of components of the computing device 6 may be implemented by hardware circuits.

The outside-vehicle information acquirer M1 is constituted by, for example, a sensor for outputting information on an environment outside the automobile 1 (outside environment) to the computing system SY, and includes, for example, (1) a plurality of cameras 50 provided on, for example, a body of the automobile 1 and configured to capture an image of an outside environment, (2) a plurality of radars 51 provided on, for example, the body of the automobile 1 and configured to detect, for example, an outside-vehicle object, (3) a vehicle speed sensor configured to detect an absolute speed of the automobile 1, (4) an accelerator opening angle sensor configured to detect a pressing amount of an accelerator pedal of the automobile 1, (5) a steering angle sensor configured to detect a rotation angle (steering angle) of a steering wheel of the automobile 1, (6) a brake sensor configured to detect a pressing amount of a brake pedal of the automobile 1, and (7) a position sensor configured to detect a location of the automobile 1 (vehicle location information) by using a global positioning system (GPS). In FIG. 1, the cameras 50 and the radars 51 are illustrated as the outside-vehicle information acquirer M1, and the other components of the configuration (i.e., a vehicle speed sensor, an accelerator opening angle sensor, a steering angle sensor, a brake sensor, and a position sensor) are collectively shown as the "outside-vehicle information acquirer."

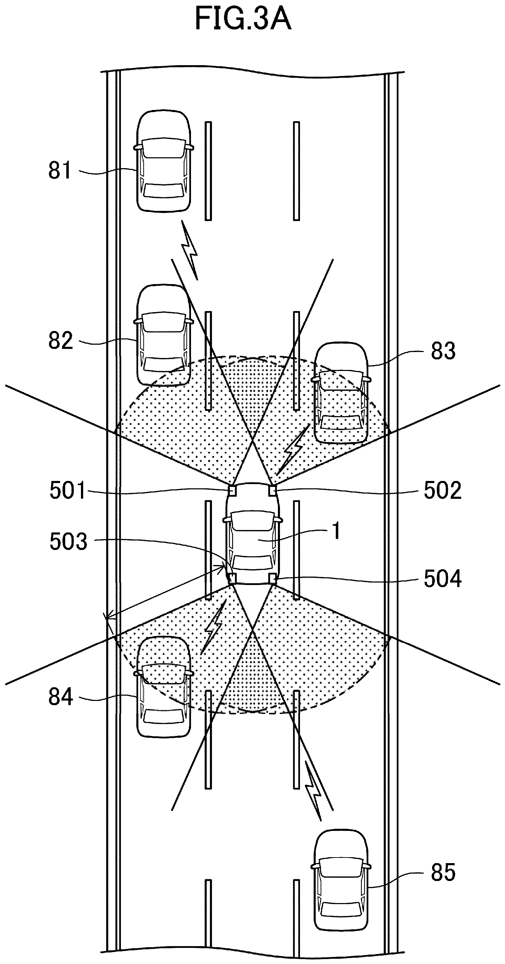

Each of the cameras 50 is oriented to capture an image of surroundings of the automobile 1 horizontally by 360°. Each camera 50 captures an optical image showing an outside environment, and generates image data. Each camera 50 outputs the generated image data to the computing device 6. In FIG. 3A described later, for simplicity of description, the cameras 50 are disposed at the four corners of the automobile 1, and a right front camera, a left front camera, a right rear camera, and a left rear camera are respectively denoted by 501, 502, 503, and 504. Although not shown, the radars 51 are disposed at locations corresponding to the cameras. The number and locations of the cameras 50 are not limited to the arrangement illustrated in FIG. 3A.

In a manner similar to the cameras 50, each of the radars 51 is oriented such that the detection range expands horizontally by 360° around the automobile 1. The type of the radars 51 is not specifically limited, and a millimeter wave radar or an infrared radar, for example, may be employed. Although not shown in FIG. 3A, the radars 51 are oriented at locations corresponding to the cameras.

The computing system SY may be configured to receive an output from an in-vehicle information acquirer M2 in addition to an output from the outside-vehicle information acquirer M1, generate a path based on the outputs from the outside-vehicle information acquirer M1 and the in-vehicle information acquirer M2, and determine a target motion.

The in-vehicle information acquirer M2 is constituted by, for example, a sensor that outputs information on an in-vehicle environment of the automobile 1 to the computing system SY, and includes, for example, (1) an in-vehicle camera disposed on an in-vehicle mirror, a dashboard, or other places of the automobile 1 and configured to capture a facial expression and a posture of a driver, an in-vehicle environment, and others, and (2) an in-vehicle sensor configured to acquire biometric information (e.g., body temperature, heart rate, or breathing) of the driver.

The actuator 7 is configured to operate in response to control from the computing system SY, and includes, for example, an engine 71, a brake 72, a steering 73, and a transmission 74. The actuator 7 also includes a so-called body-system actuator 75 such as an air bag and an automatic window (which is denoted as a "body system" in FIG. 1). The "actuator" as used herein either refers to one of various actuators for generating a driving force, a braking force, and a steering angle without distinguishing these actuators from one another, as in the case of the engine 71, the brake 72, the steering 73, and the transmission 74, or collectively refers to these actuators. Although not shown specifically, each actuator 7 may include an ECU, or may be configured to operate in response to control of an autonomous driving function unit 60 described later without including an ECU.

The engine 71 is a power driving source, and includes an internal combustion engine (e.g., a gasoline engine or a diesel engine). The computing system SY outputs an engine output change signal to the engine 71 in a case where the automobile 1 needs to be accelerated or decelerated. The engine 71 is controlled based on, for example, the manipulated variable of the accelerator pedal by a driver in manual driving, but is controlled based on a target motion signal indicating a target motion and output from the computing system SY (hereinafter referred to simply as a target motion signal) in assist driving or autonomous driving. Although not shown, a rotating shaft of the engine 71 is coupled to an electric generator that generates electric power by an output of the engine 71. The engine 71 is an example of an actuator that generates a driving force.

The brake 72 is an electric brake that generates a braking force in this embodiment. The computing system SY outputs a brake request signal to the brake 72 in a case where the automobile 1 needs to be decelerated. The brake 72 that has received the brake request signal actuates a brake actuator (not shown) based on the brake request signal, and decelerates the automobile 1. The brake 72 is controlled based on, for example, the manipulated variable of the brake pedal by a driver in manual driving, and is controlled based on a target motion signal output from the computing system SY in assist driving or autonomous driving. The brake 72 is an example of an actuator that generates a braking force.

The steering 73 is an electric power steering (EPS) in this embodiment. In a case where the traveling direction of the automobile 1 needs to be changed, the computing system SY outputs a steering direction change signal to the steering 73. The steering 73 is controlled based on, for example, the manipulated variable of the steering wheel (i.e., a handle) by a driver in manual driving, and is controlled based on a target motion signal output from the computing system SY in assist driving or autonomous driving. The steering 73 is an example of an actuator that generates a steering angle.

The transmission 74 is a multistep transmission. The computing device 6 outputs a gear stage change signal to the transmission 74, in accordance with a driving force to be output. The transmission 74 is controlled based on, for example, the manipulated variable of the shift lever by a driver or a manipulated variable of the accelerator pedal by the driver in manual driving, and is controlled based on a target motion calculated by the computing device 6 in assist driving or autonomous driving.

The computing system SY outputs a control signal based on an output of, for example, an accelerator opening angle sensor to, for example, the engine 71 in manual driving. On the other hand, in assist driving or autonomous driving, the computing system SY sets a traveling path of the automobile 1, and outputs a control signal to, for example, the engine 71 such that the automobile 1 travels on the traveling path.

### <1. Configuration of Computing System>

As illustrated in FIG. 1, the computing system SY includes a telematics unit 2, a V2X communication unit 3, a security gateway device 4, and the computing device 6. The computing device 6 and the security gateway device 4 here are separated in terms of function, and are also physically separated from each other. For example, in a case where the computing device 6 and the security gateway device 4 are implemented by semiconductor chips, these devices are preferably constituted by different chips and are provided on different systems of power supply lines.

The telematics unit 2 includes an RF part 21 and a demodulator 22. The RF part 21 processes an RF signal received from an external network 90 (e.g., a mobile radio communication network such as a 4G line) through a vehicle-mounted antenna (not shown). The demodulator 22 demodulates the RF signal received by the RF part 21, and outputs the demodulated signal to the security gateway device 4.

The V2X communication unit 3 includes an RF part 31 and a demodulator 32. The RF part 31 processes an RF signal received from external communication equipment, such as a communication unit (not shown) mounted on a vehicle 8 traveling nearby, through a vehicle-mounted antenna (not shown). The demodulator 32 demodulates the RF signal received by the RF part 31, and outputs the demodulated signal to the security gateway device 4.

The external network 90 herein is used as a concept broadly including communication environments and configurations formed by networks, such as an outside-vehicle mobile communication network configured to enable communication with the own-vehicle 1 and the Internet, a device on which a communication unit is mounted, and so forth.

For example, an example of the external network 90 to be connected to the telematics unit 2 is the Internet to which an information processing device such as a server 91 and a terminal device 92 such as a cellular phone are connected. The external network 90 also includes a configuration in which the terminal device 92 held by a passenger or a mechanic, for example, of the automobile 1 and brought into the automobile from outside directly communicates with the telematics unit 2, for example, a Bluetooth (registered trademark) or Wi-Fi (registered trademark).

In a case where the V2X communication unit 3 directly or indirectly performs information communication, that is, so-called vehicle-to-vehicle communication, with vehicles traveling nearby, for example, this communication includes communication through the external network 90.

For convenience of description, devices (including automobiles) on which communication units issuing access requests to the computing device 6 are mounted will be hereinafter collectively referred to simply as external communication devices in some cases.

In the telematics unit 2 and the V2X communication unit 3, circuit configurations of the RF parts 21 and 31 and the demodulators 22 and 32 can be general circuit configurations known to date, and thus, description thereof will not be described. In the telematics unit 2 and the V2X communication unit 3, the units 20 and 30 may be integrated into one communication unit so that common circuit configurations in communication unit are merged.

The security gateway device 4 includes an authentication unit 41 that receives outputs from the demodulators 22 and 32 of the telematics unit 2 and the V2X communication unit 3, a decoding unit 42, and an encryption unit 43. This embodiment is characterized in that accesses from external communication devices are collected in this security gateway device 4, authenticated in the security gateway device 4, and then input to the computing device 6.

In a case where an external communication device makes access to the computing device 6 through the external network 90, the authentication unit 41 determines validity of the access from the external communication device based on a predetermined criterion, and determines whether to permit the access to the computing device 6. The "predetermined criterion" is not specifically limited as long as validity of access can be determined. For example, validity of an external communication device can be determined based on a public-key cryptography with a digital signature of certification authority. As the predetermined criterion, list information, such as a white list or a black list, previously held in the own-vehicle or received through a network 90 may be used. The authentication unit 41 outputs, to the decoding unit 42, a received signal from an external communication device authenticated by the authentication unit 41.

The decoding unit 42 decodes data received from the authentication unit 41. In other words, the decoding unit 42 decodes received data from the external communication device authenticated by the authentication unit 41. For example, in a case where encrypted data based on the public-key cryptography as described above is received, a decoding process is performed on this data. In decoding, tamper detection using hash operation may be performed.

The authentication unit 41 and the decoding unit 42 perform processing in cooperation in some cases, and the order and the contents of the processing performed by these units can change depending on the type and attributes of the received data.

Data that has been authenticated by the authentication unit 41 and decoded by the decoding unit 42 is encrypted by the encryption unit 43 and output to the computing device 6. That is, the security gateway device 4 and the computing device 6 are connected to each other by encryption computation. The encryption unit 43 may be omitted such that data authenticated by the authentication unit 41 and decoded by the decoding unit 42 may be transmitted without any processing from the security gateway device 4 to the computing device 6. An encryption method used in the encryption unit 43 is not specifically limited, and various methods can be selectively used depending on a required security level. As a circuit configuration corresponding to the selected encryption method, a circuit configuration known to date can be used in accordance with the encryption method, and description thereof will not be specifically described here.

The encryption level used in the encryption unit 43 may be changed in accordance with the degree of importance of data to be transmitted. For example, the security level of encryption may be enhanced for personal information or such information that is not used within an immediately given time in the future. On the other hand, in a case where it is detected that the computing device 6 operates in a thermal degeneracy mode or that a load tends to increase, the security level may be reduced so that a load of decoding decreases. From the viewpoint of enhancing security, an encryption method different from the encryption method used in the external network 90 may be used.

In addition, authentication may also be required between the security gateway device 4 and the computing device 6. In this case, even in a configuration that the security gateway device 4 is replaceable, security can be obtained.

The computing device 6 includes the autonomous driving function unit 60, the decoding unit 61 that decodes an output of the encryption unit 43 and outputs the decoded output to the autonomous driving function unit 60, and an authentication unit 62. The decoding unit 61 only needs to be configured such that a signal encrypted by the encryption unit 43 can be decoded, and any configuration known to date may be used.

In assist driving or autonomous driving, the autonomous driving function unit 60 determines a target motion of the automobile 1 based on an output from the outside-vehicle information acquirer M1, and outputs a control signal for causing the actuator 7 to operate in accordance with the target motion. An example of the configuration of the autonomous driving function unit 60 will be described in the section of "Introduction Example to Real System" described later, and is not specifically described.

The authentication unit 62 has the function of determining validity of access from the device to be authenticated, in cooperation with the authentication unit 41 of the security gateway device 4. A specific operation will be described in "2. Operation of Computing System" described below.

### <2. Operation of Computing System>

Next, an operation of the computing system SY will be described. An example operation related to autonomous driving mainly for the autonomous driving function unit 60 of the computing device 6 will be described in "Introduction Example to Real System" described later, and a method for processing received data from an external network will now be described.

The method for processing received data described later is implemented by cooperative operation of the security gateway device 4 (especially, the authentication unit 41) and the computing device 6 (especially, the authentication unit 62), and which one of these devices is a main device is not specifically limited. That is, in the operation description below, processing is performed in one of the security gateway device 4 or the computing device 6 for convenience of description, and the process may be performed in the other device or may be performed in both of the devices. Processing in the "authentication unit 41 of the security gateway device 4" will be simply referred to as the process in the "security gateway device 4." The same also holds for the authentication unit 62 of the computing device 6.

### -2-1. Received Data Processing Method 1-

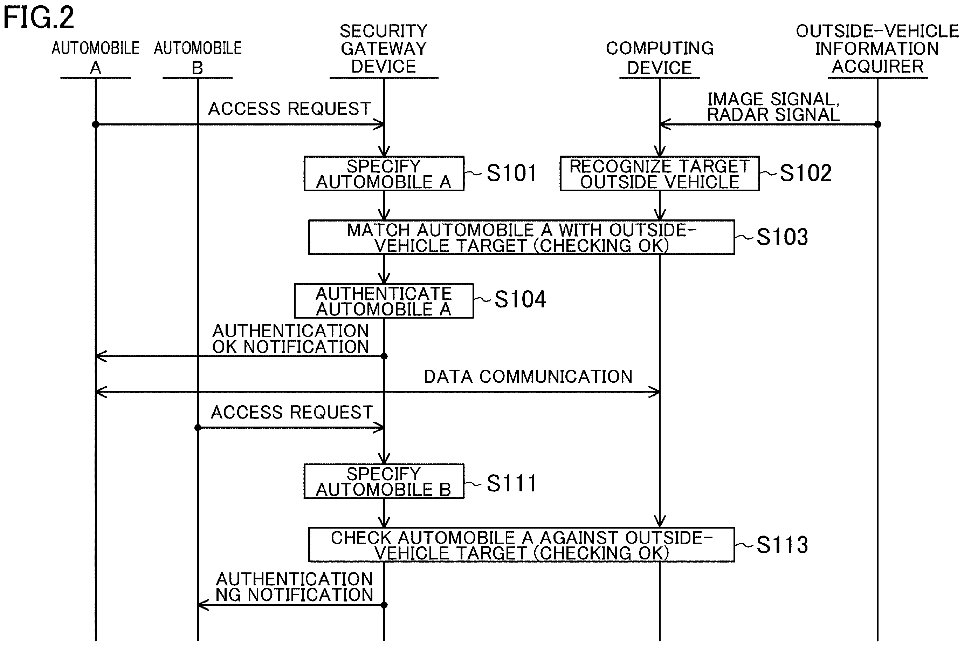

With reference to the flowchart in FIG. 2, a received data processing method 1 for processing received data from the external network 90 will be described. In this description, access requests are issued from (1) an automobile A having valid access authority and (2) an unauthorized automobile B such as spoofing, through the external network 90.

First, reception processing for an access request from the automobile A will be described.

In step S101 of FIG. 2, when the security gateway device 4 receives an access request from an external communication device through the external network 90, the security gateway device 4 executes a process of specifying the request. Here, since the access request from the automobile A is received, a specifying process of specifying the automobile A is executed. For example, in the case of vehicle-to-vehicle communication, since information on, for example, the type and manufacturer of the vehicle is transmitted as information based on a standard, the security gateway device 4 specifies the automobile A based on the information. In FIG. 3A, it is assumed that as a result of the specifying process of the automobile A, an access request from an automobile 81 traveling on the left front of the own-vehicle 1 is specified.

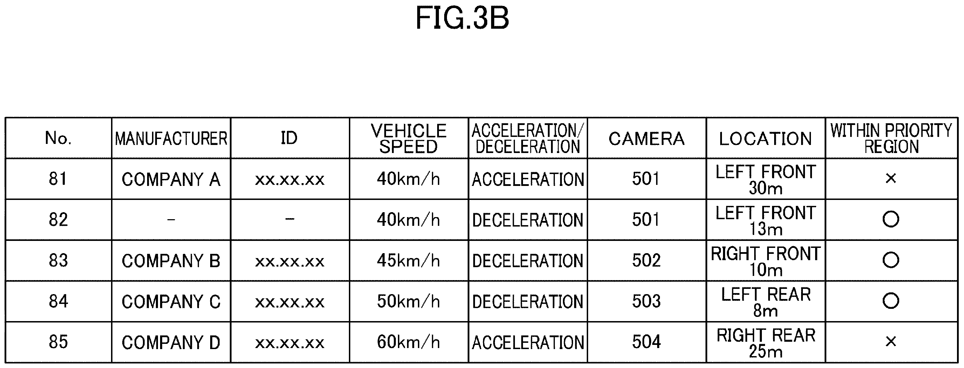

At this time, in the computing device 6, image pickup information taken by the cameras 50 and received wave information of the radars 51 are received, and a target outside the vehicle is recognized (step S102). For example, in computing device 6, it is recognized what type of the automobile 8 travels at which location around the own-vehicle 1. The recognized target such as the automobile 8 is managed in, for example, a list as shown in FIG. 3B, and is registered in, for example, a database held by the computing device 6. In this embodiment, the automobile A is registered as an automobile 81 in the database, whereas an automobile B is not registered in the database.

In next step S103, in the computing device 6 or the security gateway device 4, checking is performed on whether the automobile A specified by the security gateway device 4 is included in the automobiles recognized in the recognition process of step S102 or not. Since the automobile A is registered in the database, it is confirmed that the automobile A (automobile 81) travels around the own-vehicle 1, and the checking result is determined to be OK.

Thereafter, in step S104, the security gateway device 4 performs authentication based on received data from the automobile A. If the authentication result is OK, the security gateway device 4 issues a notification indicating that the authentication result is OK to the automobile A, and data communication between the automobile A and the computing device 1 is established.

Next, a reception process related to an access request from an automobile B is described.

In step S111 in FIG. 2, when the security gateway device 4 receives an access request from the automobile B through the external network 90, the security gateway device 4 performs a specifying process on the automobile B in a manner similar to the automobile A.

In next step S113, in a manner similar to the automobile A, checking is performed on whether the automobile B is included in automobiles recognized in the recognition process in step S102. Since the automobile B is not registered in the database, it is determined that a checking result is NG.

Subsequently, the security gateway device 4 sends a notification that the matching result is NG to the automobile B without performing authentication, and the process is finished.

As described above, in this reception method, checking of an external communication device (automobile in this embodiment) that has issued an access request is performed based on the information acquired by the outside-vehicle information acquirer M1. Accordingly, security can be enhanced.

Thereafter, authentication is performed after the checking step to an access request is finished and the checking result is OK. That is, if the checking result is NG, no authentication is performed. Accordingly, unnecessary processes can be eliminated, and a computation load can be reduced. For example, under a saturation attack showing as if a large number of automobiles are traveling while several automobiles are actually traveling near the own-vehicle, it is possible to perform authentication only on automobiles around the own-vehicle.

### -2-2. Received Data Processing Method 2-

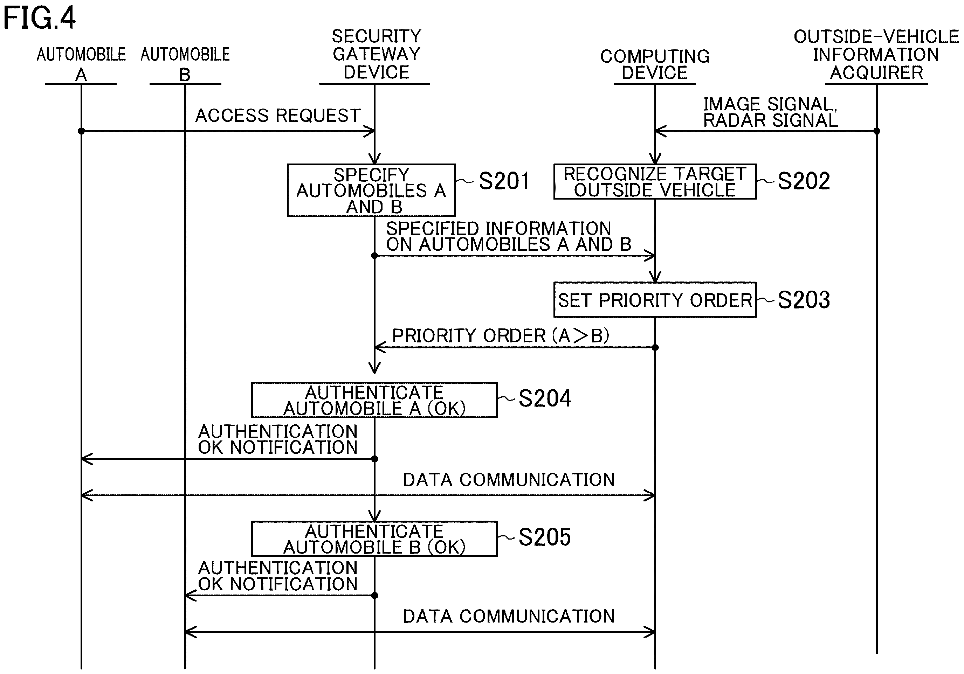

Next, with reference to the flowchart in FIG. 4, a received data processing method 2 for processing received data from an external network will be described. The following description will be given on the assumption that automobiles 81 and 83 through 85 illustrated in FIGS. 3A and 3B (hereinafter also collectively referred to as FIG. 3) issue access requests. FIG. 4 shows an excerpt of a process related to the automobiles 81 and 83. The automobile 82 is an automobile having no communication function.

In step S201 in FIG. 4, when the security gateway device 4 receives an access request from an external communication device though the external network 90, the security gateway device 4 performs a specifying process of specifying the external communication device, in a manner similar to step S101 described above. Here, it is assumed that the automobiles 81 and 83 through 85 shown in FIG. 3B are specified.

At this time, in the computing device 6, in a manner similar to step S102, image information captured by the cameras 50 and received wave information of the radars 51 are received, and a target outside the vehicle is recognized (step S202). Here, it is assumed that the automobiles 81 through 85 are recognized.

Thereafter, the computing device 6 receives information on the automobiles 81 and 83 through 85 as a result of the specifying process in step S201 from the security gateway device 4, links the received information to information on the automobiles 81 through 85 recognized in the computing device 6, and these pieces of information are collectively registered in, for example, the database.

In FIG. 3B, ID information indicating the name of a manufacturer and the vehicle type is included in the information received by the security gateway device 4 from the automobiles 81 and 83 through 85. The vehicle speed, acceleration and deceleration situations and location (direction) of each vehicle are information recognized in the computing device 6, based on information acquired by the cameras 50 and the radars 51.

In FIG. 3B, "within priority region" refers to information indicating whether an automobile is present within a predetermined range (hereinafter referred to as a priority region) from the own-vehicle 1 or not. It can also be determined whether a vehicle is within the priority region or not based on the information acquired by the cameras 50 and the radars 51.

Linkage of data between the security gateway device 4 and the computing device 6 is performed such that ID information received by the security gateway device 4 and the recognition information in the computing device 6 based on information acquired by the cameras 50 and the radars 51 are compared, and items having common elements are linked to each other.

In subsequent step S203, in the computing device 6, a priority order of the automobiles 81 through 85 is set based on a preset criterion. The priority order is set such that a higher order is provided to an access request for which communication is preferably established relatively early among access requests from a plurality automobiles. Specifically, as the preset criterion, for example, the priority order is set higher as the distance to the own-vehicle 1 decreases, based on the distance to the own-vehicle 1. Alternatively, for example, a predetermined region from the own-vehicle 1 is set as a priority region, and priority is given on automobiles within this priority region. Specifically, as illustrated in FIG. 4, for example, in a case where access requests are issued from the automobiles 81 and 83, priority is given on the automobile 83 within the priority region.

Alternatively, as illustrated in FIG. 3B, for example, comprehensive determination of a plurality of parameters may be set as a criterion such that the priority order is set based on the distance to the own-vehicle 1, acceleration and deceleration situations, direction, and so forth in a case where vehicle speed information of the automobiles 81 through 85 has been obtained.

Information on the priority order set in the computing device 6 is sent to the security gateway device 4, and the security gateway device 4 performs an authentication process according to this priority order. In the example of FIG. 4, first, in step S204, an authentication process of the automobile 83 is performed, and mutual communication is established between the automobile 83 and the computing device 6. Thereafter, in step S205, authentication of the automobile 81 is performed, and mutual communication is established between the automobile 81 and the computing device 6.

As described above, in this reception method, based on information acquired by the outside-vehicle information acquirer M1, the priority order is set for the external communication device (an automobile in this embodiment) that has issued access, and authentication is performed based on the priority order. Accordingly, even in a case where a plurality of external communication devices issue access at the same time, communication can be sequentially established from a more appropriate external communication device.

For an external communication device that has not been recognized based on the information acquired by the outside-vehicle information acquirer M1, for example, the process of significantly reducing the priority order or removing the external communication device from a target to which the priority order is given may be performed. In this manner, unauthorized access can be eliminated so that security can be enhanced.

In the description for the two "Received Data Processing Methods" above, automobiles are described as an example of external communication devices, but external communication devices are not limited to automobiles. For example, external communication devices may be other vehicles such as two-wheeled vehicles, or may be objects such as roadside units placed on, for example, a road. In this case, a reception process can be performed in a manner similar to the case of automobiles.

Examples of data sent from external communication devices include map information and update information on software. In the computing device 6, data received from an external communication device may be used for update of internal software or generating a path of the own-vehicle 1.

In summary, the computing system SY according to this embodiment is configured such that the computing device 6 that has received an output from the outside-vehicle information acquirer M1 mounted on the automobile generates a path avoiding an obstacle on a road, determines a target motion of the automobile 1 traveling along the path, and outputs a control signal for implementing the target motion to the actuator 7 that generates a driving force, a braking force, and a steering angle. In this embodiment, the computing device 6 is configured to directly receive an output from the outside-vehicle information acquirer M1, while receiving access from the external network 90 through the security gateway device 4.

This interposition of the security gateway device 4 can prevent or reduce an influence on a process of the computing device 6 by, for example, an access situation from the external communication device. For example, in a case where access is issued from a large number of external communication devices, a load on this process increases, but the interposition of the security gateway device 4 for an authentication process and other processes can prevent or reduce application on an excessive load to the computing device 6. In addition, since an output of the outside-vehicle information acquirer M1 is directly applied to the computing device 6, even a relatively large volume of data can be transmitted without delay.

Access paths from external communication devices are collectively input to the security gateway device 4 so that processes such as authentication are performed in the security gateway device 4, and signals only of authenticated external communication devices are allowed to flow toward the computing device 6. Accordingly, it is further ensured to prevent or reduce unauthorized access to the computing device 6 having an important function of generating a driving force, a braking force, and a steering angle. For example, in the case of determining an incident from received data as described in PATENT DOCUMENT 1, fraud detection may be delayed. However, the configuration of this embodiment can avoid a situation of direct communication between an external communication device and the computing device 6 so that a delay in fraud detection can be prevented pr reduced, and a risk of being hacked can be significantly reduced.

In addition, since the security gateway device 4 and the computing device 6 are physically separated from each other, software of the security gateway device 4 can be easily updated and hardware can be easily replaced by new hardware.

### OTHER EMBODIMENTS

The technique disclosed here is not limited to the embodiment described above, and can be substituted without departing from the scope of the claims.

For example, the security gateway device 4 may be configured to output a start signal for actuating the computing device 6 while the computing device 6 is in a sleep state or a suspended state in a case where access received from an outside-vehicle communication device through an external network is valid. This start signal may be configured to be sent to, for example, a power supply circuit (not shown) that manages a power supply of a main computing unit 610, a safety function unit 630, and/or a backup safety function unit 650, and configured to restore by using, as a trigger, a time when the power supply circuit receives the start signal.

### (Introduction Example to Real System)

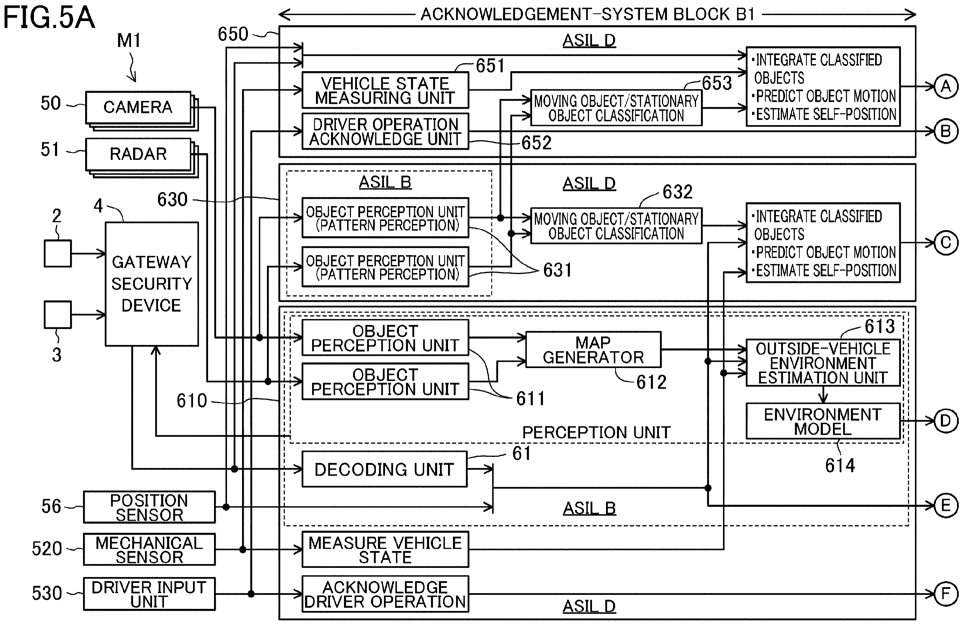

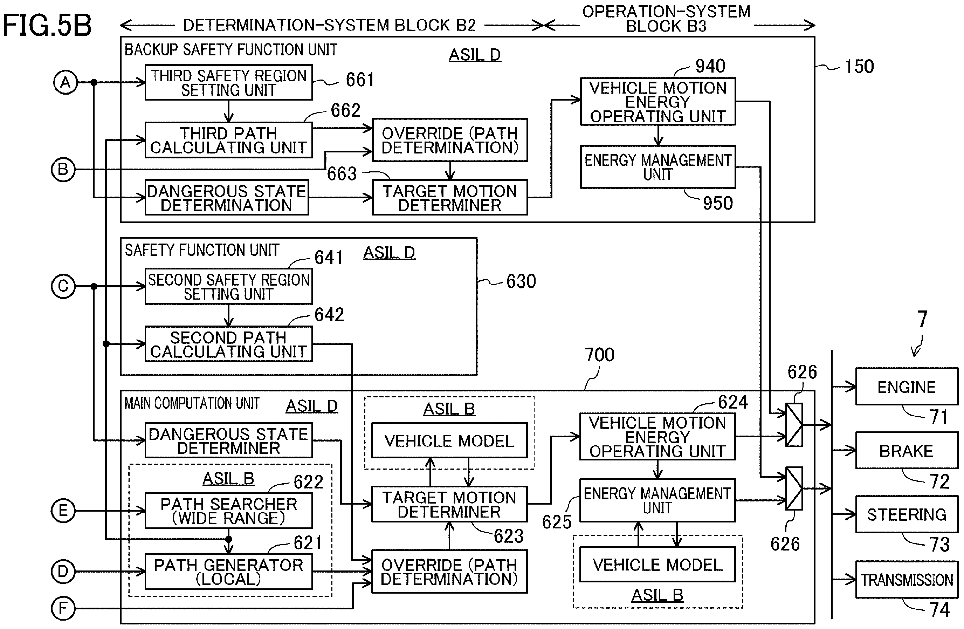

With reference to FIGS. 5A and 5B, an introduction example to a real system will be described. In the following description, FIGS. 5A and 5B will be collectively referred to simply as FIG. 5.

### -1. Summary-

First, an automobile computing system SY (hereinafter referred to as the computing system SY) according to the present disclosure is divided into (1) a configuration for acknowledging an outside-vehicle environment and an in-vehicle environment (including a state of a driver) (hereinafter also referred to as an acknowledgement-system block B1), (2) a configuration for determining, for example, various states and situations based on an acknowledgement result in the acknowledgement-system block B1 and determining an operation of the automobile 1 (hereinafter also referred to as a determination-system block B2), and (3) a configuration for generating, for example, signals and data to be specifically transferred to actuators based on the determination in the determination-system block B2 (hereinafter also referred to as an operation-system block B3). The technique disclosed here has a feature in which the acknowledgement-system block B1, the determination-system block B2, and the operation-system block B3 are integrated in one unit and implemented. In the computing system SY, the acknowledgement-system block B1, the determination-system block B2, and the operation-system block B3 achieve the functions as the autonomous driving function unit 60 described above. In FIG. 5, the computing system SY includes a processor and a memory. The memory stores a module that is software executable by the processor. Functions of sections of the acknowledgement-system block B1, the determination-system block B2, and the operation-system block B3 illustrated in FIG. 5 are implemented by execution of the modules stored in the memory by the processor. The memory also stores data of models used in the modules. A plurality of processors and a plurality of memories may be provided.

The computing system SY includes (1) the main computing unit 610 constituted by the acknowledgement-system block B1, the determination-system block B2, and the operation-system block B3 for implementing autonomous driving in normal driving, (2) the safety function unit 630 having the function of mainly complementing the acknowledgement-system block B1 and the determination-system block B2 of the main computing unit 610, and (3) the backup safety function unit 650 that moves the automobile 1 to a safe location when an abnormal event, such as a failure of the function of the main computing unit 610 or the safety function unit 630, occurs.

In this computing system SY, the acknowledgement-system block B1 and the determination-system block B2 of the main computing unit 610 perform processing by using various models constructed by deep learning using a neural network. By performing the processing using such models, it is possible to perform driving control based on overall determination of, for example, a vehicle state, an outside-vehicle environment, and a driver state, that is, control by making a large amount of input information cooperate in real time. Recognition of an outside-vehicle environment using deep learning and calculation of paths are yet to be developed, and are supposed to remain at about ASIL-B. In FIG. 5, ASIL information in each block is shown as reference information, but the present disclosure is not limited to this description, and blocks may have function safety levels different from those shown in FIG. 5.

The safety function unit 630 is configured to (1) perceive an object outside a vehicle (hereinafter referred to as a target in this disclosure) based on a recognition method for, for example, a target conventionally employed for automobiles, and (2) set a safe region in which an automobile can pass with safety by a method conventionally employed for automobiles and set a path passing through the safe region as a traveling path through which automobiles have to pass. Such so-called rule-based determination and processing are performed so that a function safe level equivalent to ASIL-D can be thereby achieved.

The computing system SY is characterized in that the main computing unit 610 and the safety function unit 630 perform processing for the same purpose (e.g., path generation) in parallel, based on the same input information (including information acquired by the outside-vehicle information acquirer M1 and the in-vehicle information acquirer M2). Accordingly, deriving of a deviation process from the main computing unit 610 can be monitored, and determination or processing by the safety function unit 630 is employed, or computation is performed by the main computing unit 610 again, as necessary.

Functions of the main computing unit 610 and the safety function unit 630 (hereinafter these functions will also be referred to as a vehicle control function) are collectively constituted by one or more chips, or the main computing unit 610 and the safety function unit 630 may be constituted by different independent chips.

The computing system SY includes the backup safety function unit 650 (corresponding to a backup computing device 30) in order to handle even an event in which failures occur in both the main computing unit 610 and the safety function unit 630. The backup safety function unit 650 generates a path in a rule base based on outside-vehicle information, and has the function of executing vehicle control until an own-automobile is stopped at a safe location, as a function different from the main computing unit 610 and the safety function unit 630. Thus, the main computing unit 610 and the safety function unit 630 are preferably constituted by different devices (chips).

### -2. Configuration-

With reference to FIG. 5, a specific configuration of the computing system SY will now be described. Part of the configuration already described in the embodiment will be described by using common characters in some cases. Common part of the configurations may not be described in detail.

The computing system SY receives, as input signals, data acquired by the outside-vehicle information acquirer M1 that acquires information on an outside-vehicle environment of an automobile and the in-vehicle information acquirer M2 that acquires information on an in-vehicle environment of an automobile. As an input signal to the computing system SY, information from a system or a service connected to an outside-vehicle network (e.g., the Internet) may be input through the security gateway device 4.

Examples of the outside-vehicle information acquirer M1 include (1) the plurality of cameras 50, (2) the plurality of radars 51, (3) a mechanical sensor 520 such as the vehicle speed sensor 52, (4) a driver input unit 530 such as an accelerator opening angle sensor 53, a steering angle sensor 54, and a brake sensor 55, and (5) a position sensor 56 including a positioning system such as a GPS.

Examples of the in-vehicle information acquirer M2 include an in-vehicle camera 58 and an in-vehicle sensor 59. The in-vehicle sensor 59 includes, for example, a sensor for detecting a manipulation of a driver on various manipulation targets such as an accelerator pedal, a brake pedal, a steering, and various switches. FIG. 5 does not show the in-vehicle information acquirer M2.

### -2-1. Main Computing Unit-

Here, an example configuration of the main computing unit 610 and path generation using deep learning by the main computing unit 610 will be described.

As illustrated in FIG. 5, the main computing unit 610 includes an object perception unit 611 that perceives an object (target) outside a vehicle, based on inputs from the cameras 50 and/or the radars 51. The object perception unit 611 has the function of perceiving an object outside a vehicle, from an image (including video) taken by the cameras 50 outside a vehicle or a peak list of reflected waves using the radars 51. As described in the embodiment, the main computing unit 610 has the function of determining what is a perceived object by using deep learning. An object perceiving technique based on an image or radio waves known to date is applicable to the object perception unit 611.

A result perceived by the object perception unit 611 is sent to a map generator 612. The map generator 612 performs a map generation process on each region obtained by dividing a vicinity of an own-vehicle into a plurality of regions (e.g., a forward region, a left-right region, and a rearward region). In the map generation process, for each region, object information perceived by the cameras 50 and object information perceived by the radars 51 are united and reflected in a map.

The map generated by the map generator 612 and part of data (e.g., map information) input from the security gateway device 4 and decoded by the decoding unit 61 are used for estimating an outside-vehicle environment by an image perceiving process using deep learning in an outside-vehicle environment estimation unit 613. Specifically, in the outside-vehicle environment estimation unit 613, a 3D map representing an outside-vehicle environment is created by the image perceiving process based on an environment model 614 constructed by using deep learning. The deep learning uses a deep neural network (DNN). Examples of the deep neural network include a convolutional neural network (CNN). More specifically, in the outside-vehicle environment estimation unit 613, (1) maps for the regions are combined and an integrated map representing surroundings of the own-vehicle 1 is created, (2) displacement of the distance to the own-vehicle 1, direction, and relative speed with respect to a moving object in the integrated map are predicted, and (3) the result is incorporated in an outside-vehicle environment model 614. In addition, in the outside-vehicle environment estimation unit 613, (4) a position of the own-vehicle 1 on the integrated map is estimated based on a combination of high-accuracy map information taken from inside or outside of a vehicle, and positional information, vehicle speed information, and six-axis information acquired by, for example, a GPS, (5) a cost for the path described above is calculated, and (6) the result is incorporated in the outside-vehicle environment model 614 together with motion information of the own-vehicle 1 acquired by sensors. Through these processes, in the outside-vehicle environment estimation unit 613, the outside-vehicle environment model 614 is updated at any time, and is used for path generation by a path generator 621. Processing results in the object perception unit 611, the map generator 612, and/or the outside-vehicle environment estimation unit 613, and the outside-vehicle environment model 614 are used for processing in the authentication unit 41 of the security gateway device 4 described above. That is, the object perception unit 611, the map generator 612, the outside-vehicle environment estimation unit 613, and the outside-vehicle environment model 614 include the function as the authentication unit 62. Although not shown, the function as the authentication unit 62 may be provided to the safety function unit 630.

A signal of a positioning system such as a GPS and data for, for example, a car navigation transmitted from an outside-vehicle network are input through the security gateway device 4, decoded by the decoding unit 61, and sent to a path searcher 622. The path searcher 622 searches for a wide-range path of a vehicle by using a signal of a positioning system such as a GPS and data for, for example, a navigation transmitted from an outside-vehicle network.

The path generator 621 generates a traveling path of a vehicle based on the outside-vehicle environment model 614 and an output from the path searcher 622.

### -2-2. Safety Function Unit-

A configuration of the safety function unit 630 and path generation in a rule base by the safety function unit 630 will now be described.

As illustrated in FIG. 5, the safety function unit 630 includes an object perception unit 631 that perceives an object (target) outside a vehicle, based on inputs from the cameras 50 and/or the radars 51, in a manner similar to the main computing unit 610. The safety function unit 630 perceives an object outside a vehicle with a technique similar to the main computing unit 610, and determines what is the perceived object by a technique in a rule base known to date without using deep learning. For example, it is determined what is the perceived object through an identification machine achieving a function safe level equivalent to ASIL-D.

A result perceived by the object perception unit 631 is classified into a moving object and a stationary object. In FIG. 5, the flow is executed in circuit blocks denoted by 632 and represented as "moving object/stationary object classification." Specifically, in this process, (1) surroundings of the own-vehicle are divided into a plurality of regions (e.g., a forward region, a left-right region, and a rearward region), (2) object information perceived by the cameras 50 and object information perceived by the radars 51 are integrated in each region, and (3) classification information on a moving object and a stationary object for each region. Then, (4) classification results for the regions are integrated, and (5) as classification information on a moving object and a stationary object near the own-vehicle, the results are managed on a grid map as illustrated in FIG. 2, for example. With respect to a moving object, (6) a distance to the own-vehicle, a direction, and a relative speed are predicted, and results thereof are incorporated as additional information of the moving object, and (7) a location of the own-vehicle to the moving object/stationary object is estimated based on high-accuracy map information taken from outside or inside a vehicle and a combination of positional information, vehicle speed information, and six-axis information acquired by, for example, GPS. The safety function unit 630 detects a vehicle state based on vehicle speed information and six-axis information, and uses the vehicle state for path generation as additional information of the own-vehicle 1. In the safety function unit 630, a path is generated based on the estimated location of the own-vehicle with respect to the moving object/stationary object and a search result of a safe region.

The paths generated by the main computing unit 610 and the safety function unit 630 are sent to a target motion determiner 710, and an optimum target motion is determined in accordance with a comparison result of the paths. For example, as described in the embodiment above, in a case where the path generated by the main computing unit 610 deviates from the safe region searched by the safety function unit 630, the path generated by the safety function unit 630 is employed.

The target motion determiner 623 receives outputs from the main computing unit 610 and second computing units 110 and 120, and determines a target motion of the automobile 1.

A vehicle motion energy operating unit 624 and an energy management unit 625 calculate the amount of control of the actuator 7 such that a highest energy efficiency can be obtained in achieving the target motion determined by the target motion determiner 623. Specifically, for example, the energy management unit calculates an opening/closing timing of an intake/exhaust valve (not shown) and a fuel injection timing of an injector (not shown) and other parameters with which a highest fuel efficiency can be obtained in achieving an engine torque determined by the target motion determiner 623.

### -2-3. Backup Safety Function Unit-

A configuration of the backup safety function unit 650 and a path generation in a rule base by the backup safety function unit 650 will now be described. The backup safety function unit 650 has a configuration necessary for enabling movement operation to a minimum safe stop position in a rule base and a stop operation. The configuration can be generally implemented with a similar function to the safety function unit 630.

As illustrated in FIG. 5, in the backup safety function unit 650, a moving object and a stationary object are separated from each other based on a result perceived by the object perception unit 631. In FIG. 5, the flow is executed in circuit blocks denoted by 653 and represented as "moving object/stationary object classification." As illustrated in FIG. 5, the object perception unit 631 may be common to the safety function unit 630, or may be individually provided in the backup safety function unit 650. In addition, the backup safety function unit 650 includes a vehicle state measuring unit 651 that measures a vehicle state, and a driver operation acknowledge unit 652 that acknowledges an operation state of a driver. The vehicle state measuring unit 651 acquires a vehicle state based on vehicle speed information and six-axis information in order to use the vehicle state for path generation as additional information of the own-vehicle 1. The other functions are independently provided in the main computing unit 610 and the safety function unit 630, but substantial functions are similar to those in the configuration described above. Thus, details thereof will not be described.

### INDUSTRIAL APPLICABILITY

The technique disclosed here is useful for an automobile computing system to be mounted on an automobile.

### DESCRIPTION OF REFERENCE CHARACTERS

- SY: computing system
- 4: security gateway device
- 41: authentication unit
- 42: decoding unit
- 44: encryption unit
- 6: computing device
- M1: outside-vehicle information acquirer

## Claims

1. An automobile computing system configured to be mounted on an automobile, the automobile computing system comprising:
a computing device configured to receive an output from an outside-vehicle information acquirer, generate a path located on a road and avoiding an obstacle, determine a target motion of an automobile in traveling along the path, and output a control signal for implementing the target motion to an actuator, the outside-vehicle information acquirer being mounted on the automobile and configured to acquire information on an outside-vehicle environment, the actuator being configured to generate a driving force, a braking force, and a steering angle; and
a security gateway device disposed between the computing device and an external network to which an external communication device is connected, the security gateway device being configured to determine validity of access from the communication device based on a preset criterion and determine whether the access from the communication device is permitted or not.

2. The automobile computing system according to claim 1, wherein
the security gateway device includes
a decoding unit configured to decode a received signal received through the network,
an authentication unit configured to determine validity of the access and determine whether the access from the communication device is permitted or not, and
an encryption unit configured to encrypt a signal received from a communication device whose access is permitted by the authentication unit and decoded by the decoding unit, and output the encrypted signal to the computing device.

3. The automobile computing system according to claim 1, wherein
in a case where the access from the communication device is valid, the security gateway device outputs a start signal for starting the computing device while the computing device is in a sleep state or a suspended state.

4. The automobile computing system according to claim 1, wherein
the outside-vehicle information acquirer includes a camera, and
the security gateway device determines validity the access from the communication device based on a checking result between an image captured by the camera and the communication device that has issued the access.

5. A method for processing received data from an external network in an automobile computing system, the automobile computing system including a computing device configured to receive an output from an outside-vehicle information acquirer, generate a path located on a road and avoiding an obstacle, and determine a target motion of an automobile in traveling along the path, the outside-vehicle information acquirer being configured to acquire information on an outside-vehicle environment, and a security gateway device disposed between the computing device and an external network to which an external communication device is connected, the method comprising:
a perceiving step of perceiving a target outside a vehicle based on an output from the outside-vehicle information acquirer;
a specifying step of specifying a communication device based on a preset criterion with respect to access from the communication device to the security gateway device;
a checking step of checking the communication device specified in the specifying step against the target perceived in the perceiving step;
an authenticating step of authenticating access from a communication device with which a match is confirmed in the checking step; and
a decoding step of decoding data received from the communication device authenticated in the authenticating step by the security gateway device and outputting the decoded data to the computing device.

6. A method for processing received data from an external network in an automobile computing system, the automobile computing system including a computing device configured to receive an output from an outside-vehicle information acquirer, generate a path located on a road and avoiding an obstacle, and determine a target motion of an automobile in traveling along the path, the outside-vehicle information acquirer being configured to acquire information on an outside-vehicle environment, and a security gateway device disposed between the computing device and an external network to which an external communication device is connected, the method comprising:
a specifying step of specifying a plurality of communication devices in a case where the plurality of communication devices issue access to the security gateway device through an external network;
a setting step of setting, based on a preset criterion, a priority order to the plurality of communication devices specified in the specifying step;
an authenticating step of authenticating the plurality of communication devices according to the priority order set in the setting step; and
a decoding step of decoding data received from the communication devices authenticated in the authenticating step by the security gateway device and outputting the decoded data to the computing device.

7. The method according to claim 6, wherein
the specifying step includes a fraud device specifying step of specifying a device issuing unauthorized access from the plurality of communication devices, based on a preset criterion, and
the device specified in the fraud device specifying step is removed from a target to which the priority order is provided.
